# EUROPEAN PATENT APPLICATION

(11) **EP 1 890 351 A1**
(43) Date of publication of application: **20.02.2008**
(21) Application number: 06745819.0
(22) Date of filing: 28.04.2006
(51) Int. Cl.: H01M 8/02, H01M 4/86, H01M 8/10

(54) **MEMBRANE ELECTRODE ASSEMBLY AND DIRECT LIQUID FUEL TYPE FUEL CELL**

(30) Priority: 18.05.2005 JP 2005145012
(71) Applicant: TOAGOSEI CO., LTD., Tokyo 105-8419 (JP)
(72) Inventor: HIRAOKA, Hideki, TOAGOSEI CO. Ltd. Corp. Res. Lab., Nagoya-shi Aichi 4550027 (JP); SATO, Daigo, TOAGOSEI CO. Ltd. Corp. Res. Lab., Nagoya-shi Aichi 4550027 (JP)
(74) Representative: Wilhelms . Kilian & Partner Patentanwälte
(86) International application number: PCT/JP2006/308938
(87) International publication number: WO 2006/123529

(57) **Abstract**

To provide a membrane electrode assembly suitable for a fuel cell or an electrochemical device, and a direct methanol fuel cell employing the membrane electrode assembly.

A membrane electrode assembly comprising an electrolyte membrane formed from a porous substrate having the interior of pores filled with a polymer electrolyte, and an electrode disposed on opposite faces of the electrolyte membrane and having a catalyst layer formed from a catalyst and a polymer electrolyte, the polymer electrolyte content in the catalyst layer being higher in a face where the catalyst layer is in contact with the electrolyte membrane than in other regions of the catalyst layer; and a direct methanol fuel cell employing the membrane electrode assembly.

## Description

The present invention relates to a membrane electrode assembly in which an electrolyte membrane and an electrode are bonded, and to a direct liquid fuel cell; more particularly, it relates to a membrane electrode assembly suitable for a fuel cell or an electrochemical device and to a direct liquid fuel cell, in particular a direct methanol fuel cell, employing the membrane electrode assembly, and to fuel cell technology.

The performance of fuel cells, which are a type of electrochemical device employing a polymer electrolyte, has improved outstandingly due to developments in electrolyte membranes and catalyst technology in recent years, and they have been attracting attention as a power source for low-pollution automobiles or as a highly efficient power generation method.

This fuel cell, which employs a polymer electrolyte membrane, (hereinafter, called a 'solid polymer fuel cell') has a structure in which an electrode formed from a catalyst layer having an oxidation-reduction catalyst is layered on opposite faces of the polymer electrolyte membrane.

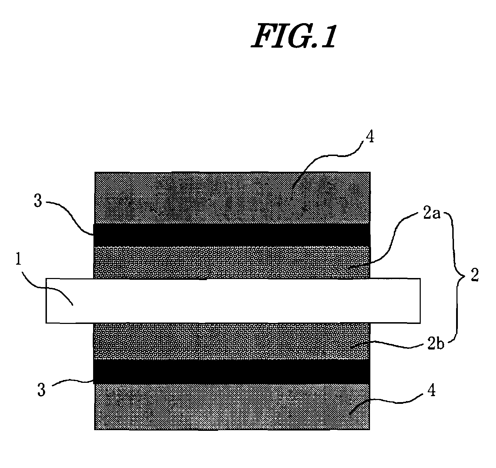

That is, in a solid polymer fuel cell, the electrolyte membrane is normally used in the form of a membrane electrode assembly (hereinafter, called an 'MEA') in which an electrode containing a catalyst such as platinum is laminated to opposite faces of the membrane; its structure is a structure as in a sectional view shown in FIG. 1, and the electrode is normally provided on opposite faces of an electrolyte membrane 1 and is formed from a catalyst layer 2 (anode side 2a and cathode side 2b), a gas diffusion layer 3, and a current collector 4.

With regard to an MEA for a solid polymer fuel cell having such a structure, various proposals for improving the power generation efficiency have been made.

For example, JP-A-09-036776 (Patent Publication 1, JP-A denotes a Japanese unexamined patent application publication) proposes the following.
1) Maximizing the concentration of a catalyst material in a catalyst electrode in the vicinity of an interface with an electrolyte membrane.
2) Layering a plurality of catalyst electrode layers having different catalyst material concentrations.
3) Increasing the thickness of a catalyst electrode layer that, among a plurality of catalyst electrode layers, is more distant from an interface with an electrolyte membrane.
4) Maximizing the concentration of an ionic conductor in the vicinity of an interface with an electrolyte membrane.

On the other hand, in a direct methanol fuel cell (also called a 'DMFC'), methanol and water are supplied to an anode, the methanol and water are reacted by means of a catalyst in the vicinity of a membrane, and protons are taken out. These fuel cells normally employ a fluorine-based polymer electrolyte membrane formed from a polyperfluoroalkylsulfonic acid.

However, a polyperfluoroalkylsulfonic acid membrane has the problem that when it is used in a fuel cell in which a fuel solution is supplied directly to the cell, such as a direct methanol fuel cell, the methanol, etc. fuel passes through the membrane, thus causing energy loss. Furthermore, since the membrane is swollen by the methanol, etc. fuel, and its area changes greatly, problems such as a bond between an electrode and the membrane peeling apart easily occur, and the fuel concentration cannot be increased. Moreover, there are the economic problems that the material itself is expensive due to it containing fluorine atoms, and since the production process is complicated and the productivity is low the cost is very high.

Because of this, there has been a desire for a polymer electrolyte membrane formed from an inexpensive hydrocarbon skeleton, for which permeability to methanol is suppressed when used in a direct methanol fuel cell, and various hydrocarbon-based electrolyte membranes have been proposed. For example, JP-A-2002-164055 (Patent Publication 2) proposes a hydrocarbon-based polymer that has a cation-exchange group and that is soluble in at least one type of organic solvent but insoluble in water.

In fuel cell-related industries, in contrast to fluorine-containing polymer electrolyte membranes such as the polyperfluoroalkylsulfonic acid membrane, electrolyte membranes formed from polymers containing no fluorine, are widely called non-fluorine polymer electrolyte membranes or hydrocarbon-based polymer electrolyte membranes.

As such a polymer electrolyte membrane, the present inventors have previously proposed an electrolyte membrane with 2-acrylamido-2-methylpropanesulfonic acid as an essential constituent monomer (WO 03/075385: Patent Publication 3).

This electrolyte membrane is a hydrocarbon-based electrolyte membrane formed by filling a porous substrate with an inexpensive hydrocarbon-based proton-conducting polymer as a polymer electrolyte, and since the porous substrate is formed from a material such as polyimide or crosslinked polyethylene that is resistant to deformation by an external force, it is possible to prevent the proton-conducting polymer with which the pores are filled from swelling excessively due to a methanol aqueous solution. As a result, permeability to methanol can be suppressed, and by taking advantage of this property application to a DMFC can be expected.

Furthermore, the present inventors have proposed reducing the contact resistance with an electrode by filling the interior of pores of a porous substrate with a polymer electrolyte and covering the surface with the polymer electrolyte without exposing the surface of the porous substrate (Japanese Patent Application No. 2004-078556).

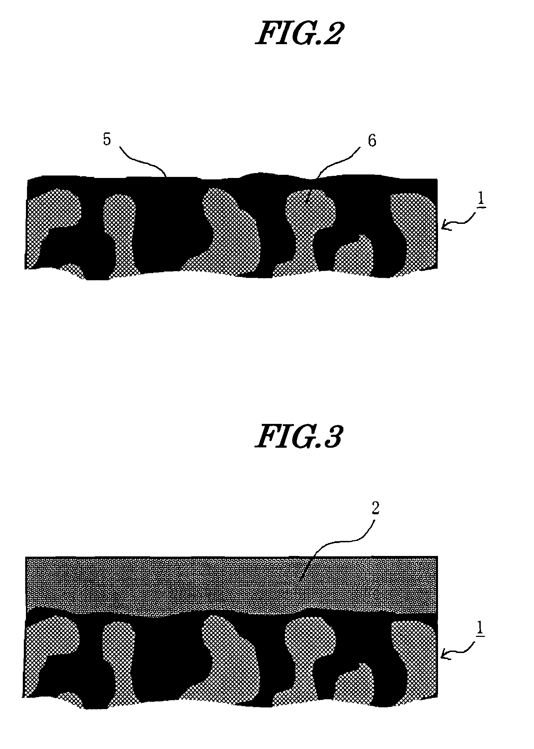

A sectional view of the vicinity of the surface of such an electrolyte membrane is shown in FIG. 2. FIG. 2 is an enlarged sectional view of a surface portion of an electrolyte membrane 1, and shows that the surface of a porous substrate 6 is covered by a polymer electrolyte 5.

This proposal is an application of the discovery that, when a porous substrate is impregnated with a solution containing a sulfonic acid-based monomer, etc. constituting a polymer electrolyte, is sandwiched with a protective film such as a PET film, and is polymerized, by maintaining a small gap between the PET film and the porous substrate hardly any of the resin on the surface comes off. Furthermore, even for a membrane that has the surface of a porous substrate exposed, by coating with a fluorine-containing polymer electrolyte solution and drying, similar properties are exhibited.

The use of such an electrolyte membrane improves the ionic linkage between the electrolyte membrane 1 and the catalyst layer 2 forming the electrode as shown in a sectional view of FIG. 3, and since the contact resistance between the electrolyte membrane and the electrode decreases, the initial properties improve. Moreover, according to an experiment carried out by the present inventors, it has been found that there is the advantage that the induction period from when it is incorporated into a cell and generation of power is started to when the performance attains a maximum is short.

Furthermore, the present inventors have proposed an electrolyte membrane having a structure in which pores of a porous substrate are filled with a polymer electrolyte, and the surface of the porous substrate is exposed, a membrane electrode assembly formed by thermocompression bonding the electrolyte membrane and an electrode at the softening temperature of the porous substrate or higher, and a fuel cell employing same (Japanese Patent Application No. 2004-114822).

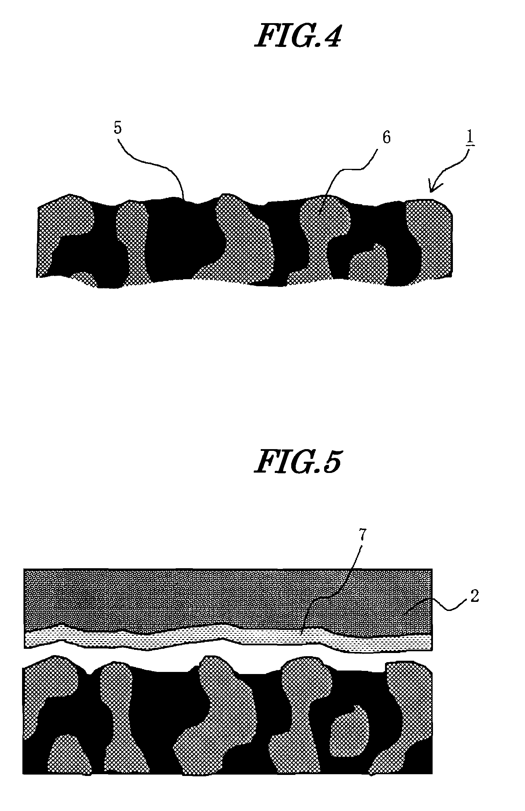

This proposal aims to improve the adhesion to an electrode by exposing, on the surface of a porous substrate 6, part of the porous substrate 6 forming an electrolyte membrane 1 as shown in FIG. 4.

Moreover, when using a non-fluorine polymer electrolyte membrane formed by filling the interior of pores of a porous substrate with a polymer electrolyte having a crosslinking structure, since increasing a crosslinking agent in the polymer electrolyte with which the interior of the pores is filled makes the internal structure dense and also makes the polymer electrolyte resistant to swelling, the effect in suppressing the permeability to methanol is enhanced.
(Patent Publication 1) JP-A-09-036776 (Claims)
(Patent Publication 2) JP-A-2002-164055 (Claims)
(Patent Publication 3) WO 03/075385 (Claims)

In the light of such circumstances, the present invention solves the problems of the above-mentioned fluorine-containing polymer electrolyte membrane and provides an inexpensive membrane electrode assembly for which the adhesion of an electrode in a fuel cell electrolyte membrane and the initial operation speed are improved, there is little permeation of methanol and a particularly long lifespan, and which is suitable for a direct methanol fuel cell and, moreover, provides a direct methanol fuel cell employing this membrane electrode assembly.

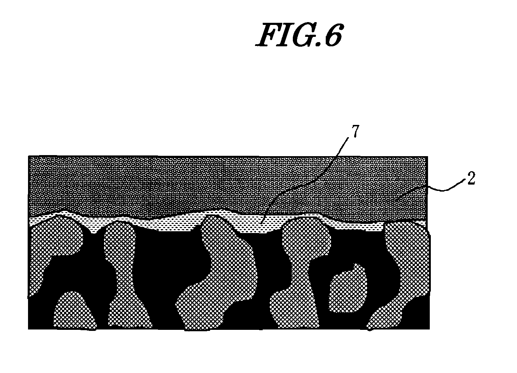

The present invention solves the above-mentioned problems, and has been accomplished by finding that, when a non-fluorine electrolyte membrane in which the interior of pores of a porous substrate is filled with a polymer electrolyte and part of the porous substrate is preferably exposed on the surface is used as an MEA, by forming on the surface of the catalyst layer of the electrode a layer having a high polymer electrolyte content (high electrolyte content layer) as denoted by 7 in FIG. 5, contact between the polymer electrolyte within the electrolyte membrane and the polymer electrolyte within the electrode after forming an MEA as shown in FIG. 6 is improved, thus giving smooth ionic conduction and greatly reducing the time taken for the cell performance to increase.
That is, the invention according to Claim 1 of the present invention is
a membrane electrode assembly comprising
an electrolyte membrane formed from a porous substrate having the interior of pores filled with a polymer electrolyte, and
an electrode disposed on opposite faces of the electrolyte membrane and having a catalyst layer formed from a catalyst and a polymer electrolyte,
the polymer electrolyte content in the catalyst layer being higher in a face where the catalyst layer is in contact with the electrolyte membrane than in other regions of the catalyst layer.

Furthermore, the invention according to Claim 2 of the present invention is
the membrane electrode assembly according to Claim 1,
wherein the surface of the porous substrate in the electrolyte membrane is not covered by the polymer electrolyte used when the interior of the pores of the substrate was filled.

Moreover, the invention according to Claim 3 of the present invention is
the membrane electrode assembly according to Claim 1,
wherein the catalyst layer has a multilayer structure in which there is a layer having a high polymer electrolyte content and a layer having a low polymer electrolyte content.

Furthermore, the invention according to Claim 4 of the present invention is
the membrane electrode assembly according to Claim 3
wherein, in the catalyst layer, the ratio by volume of the polymer electrolyte content of the layer having a high polymer electrolyte content is at least twice the ratio by volume of the polymer electrolyte content of the layer having a low polymer electrolyte content.

Moreover, the invention according to Claim 5 of the present invention is
the membrane electrode assembly according to Claim 3 or 4
wherein, in the catalyst layer, the polymer electrolyte content of the layer having a high polymer electrolyte content is at least 30% as a ratio by volume.

Furthermore, the invention according to Claim 6 of the present invention is
the membrane electrode assembly according to Claim 5
wherein, in the catalyst layer, the polymer electrolyte content of the layer having a high polymer electrolyte content is at least 60% as a ratio by volume, and the polymer electrolyte content of the layer having a low polymer electrolyte content is less than 30% as a ratio by volume.

Moreover, the invention according to Claim 7 of the present invention is
the membrane electrode assembly according to Claim 1,
wherein the electrolyte membrane has a methanol permeability coefficient at a temperature of 25°C of no greater than 15 (µm·kg)/m²·h).

Furthermore, the invention according to Claim 8 of the present invention is
the membrane electrode assembly according to Claim 1,
wherein the polymer electrolyte is obtained by polymerizing a sulfonic acid group-containing monomer and a crosslinking agent, and the proportion of the crosslinking agent is at least 15 weight % but less than 60 weight % of the total amount of monomer and crosslinking agent.

Moreover, the invention according to Claim 9 of the present invention is
the membrane electrode assembly according to Claim 3
wherein, in the catalyst layer, the layer having a high polymer electrolyte content is a layer formed from a polymer electrolyte alone.

Furthermore, the invention according to Claim 10 of the present invention is
the membrane electrode assembly according to Claim 3
wherein, in the catalyst layer, the layer having a high polymer electrolyte content is a layer formed from a composition comprising a polymer electrolyte and a plate-shaped filler.

Moreover, the invention according to Claim 11 of the present invention is the membrane electrode assembly according to Claim 3
wherein, in the catalyst layer, the layer having a high polymer electrolyte content is a layer formed from a composition comprising a polymer electrolyte and a microparticulate filler.

Furthermore, the invention according to Claim 12 of the present invention is
the membrane electrode assembly according to Claim 11,
wherein the microparticulate filler is conductive.

Moreover, the invention according to Claim 13 of the present invention is the membrane electrode assembly according to Claim 3
wherein, of the catalyst layers, the high polymer electrolyte content layer of the catalyst layer of the cathode side electrode is a layer formed from a composition comprising a polymer electrolyte and a hydrophilic microparticulate filler.

Furthermore, the invention according to Claim 14 of the present invention is
a direct liquid fuel cell employing the membrane electrode assembly according to any one of Claims 1 to 13.

The membrane electrode assembly of the present invention enables ionic conduction between a polymer electrolyte with which the interior of pores of a porous substrate is filled and a polymer electrolyte within an electrode to be carried out smoothly by having a higher polymer electrolyte content in a face of a catalyst layer of the electrode that is in contact with the electrolyte membrane than in other regions of the catalyst layer or by forming a layer having a high polymer electrolyte content (hereinafter, called a high electrolyte content layer).

Furthermore, by making ionic conduction be carried out smoothly between the polymer electrolyte within the electrolyte membrane and the polymer electrolyte within the electrode in this MEA, the induction period for cell performance when the electrolyte membrane having excellent methanol permeation suppression is incorporated into a fuel cell is shortened.

Moreover, by adding a hydrophilic material to the interior of the high electrolyte content layer of this MEA, it is possible to prevent drying of a membrane on the cathode side, which has been a problem when an electrolyte membrane having excellent methanol permeation suppression is incorporated into a fuel cell, thus enhancing the power of a DMFC.

Furthermore, in this MEA, by not covering the surface of the electrolyte membrane substrate, which is formed from a porous material, with the polymer electrolyte used when filling the interior of the pores of the substrate, the occurrence of problems such as the electrode peeling off is greatly suppressed.

Moreover, by adding a plate-shaped filler to the interior of the high electrolyte content layer in this MEA, the methanol permeation suppression is further improved and the efficiency of a DMFC is increased.

Furthermore, this MEA is suitable for a DMFC, and the fuel of the DMFC is a methanol aqueous solution, but this MEA can be applied to a fuel cell that uses a fuel other than methanol such as, for example, an aqueous solution of ethanol, isopropanol, formic acid, etc., which have been widely investigated.

### Brief Description of Drawings

(FIG. 1) A schematic drawing showing a cross-section of a membrane electrode assembly.
(FIG. 2) A schematic sectional view showing the vicinity of a surface layer of an electrolyte membrane in which the interior of pores of a porous substrate is filled with a polymer electrolyte and a surface layer portion of the porous substrate is covered by the polymer electrolyte with which the pores are filled.
(FIG. 3) A schematic sectional view showing a boundary portion between the electrolyte membrane shown in FIG. 2 and an electrode where the contact therebetween is good.
(FIG. 4) A schematic sectional view showing the vicinity of the surface layer of an electrolyte membrane in which the interior of pores of a porous substrate is filled with a polymer electrolyte and a surface layer portion of the porous substrate is not covered by the polymer electrolyte with which the pores are filled.
(FIG. 5) A schematic sectional view showing a state prior to layering of the electrolyte membrane shown in FIG. 4 with an electrode having a high electrolyte content layer on the surface.
(FIG. 6) A schematic sectional view showing a boundary portion between the electrolyte membrane and the electrode having a high electrolyte content layer on the surface shown in FIG. 5 in a state in which the electrolyte membrane and the electrode are layered and contact between the two is improved by the high electrolyte content layer.
(FIG. 7) A diagram in which the IR resistance of DMFCs of Example 1 and Example 3 was measured on the second day and plotted with current density as the abscissa, showing the moisture retaining effect of silica.

### Explanation of Reference Numerals and Symbols

- 1: Electrolyte membrane
- 2: Catalyst layer
- 2a: Anode side catalyst layer
- 2b: Cathode side catalyst layer
- 3: Diffusion layer
- 4: Current collector
- 5: Polymer electrolyte
- 6: Porous substrate
- 7: High electrolyte content layer

The membrane electrode assembly of the present invention is formed using an electrolyte membrane in which the interior of pores of a porous substrate is filled with a polymer electrolyte and a surface layer of the porous substrate is preferably exposed on the surface, and a catalyst layer-equipped electrode is laminated on opposite sides of the electrolyte membrane with the catalyst layer on the electrolyte membrane side, wherein in one of the electrodes or in both of the electrodes the polymer electrolyte content on the catalyst layer surface is made higher than in other regions, or a high electrolyte content layer is provided. This enables the initial rise in performance of a fuel cell into which this electrolyte membrane is incorporated to be promoted, thus improving the performance.

Furthermore, if an electrolyte membrane forming the membrane electrode assembly suppresses methanol permeation, this makes water permeation in a methanol aqueous solution, which is a fuel, decrease, and makes it easy for a cathode to become dry, thus degrading cell performance, and in order to prevent this the constitution is such that a hydrophilic material is added to the interior of the high electrolyte content layer, and in order to suppress methanol permeation not only for the membrane but also for the MEA overall a plate-shaped filler is added to the high electrolyte content layer. It is thereby possible to further improve the power and methanol permeation prevention properties required for a DMFC.

The electrolyte membrane used in the MEA of the present invention is an electrolyte membrane in which the interior of pores of a porous substrate is filled with a polymer electrolyte, and is preferably one in which the surface is not covered by the polymer electrolyte with which the interior of the pores is filled, and a surface layer of the porous substrate is exposed.

The porous substrate used in the above-mentioned electrolyte membrane is not particularly limited in terms of material, but is preferably a material that has the property of being softened or melted by heating and, for example, is a thermoplastic resin; more preferably it is a material for which there is substantially no swelling in methanol or water. It is particularly desirable that the change in area when wetted with water compared with when it is dry is small or almost none.

The percentage increase in area when the porous substrate is immersed in methanol or water changes depending on the immersion time and temperature, and in the present invention the percentage increase in area when immersed in pure water at a temperature of 25°C for 1 hour is preferably no greater than 20% compared with when it is dry. It is more preferable for the porous substrate to be formed from a material having a hydrophobic surface.

When such a porous substrate is formed from a material having the property of softening or melting upon heating, in a thermocompression bonding step, which is normally carried out when bonding an electrode, it softens or melts so as to be more strongly bonded to the electrode.

The softening temperature in this process is appropriately selected according to the temperature at which the fuel cell, which is a main application, is run, and it is necessary to select one having a higher softening temperature than a target fuel cell running temperature.

That is, while taking into consideration the temperature range in which the solid polymer fuel cell is normally run, it is preferable for the softening temperature to be in the range of 70°C to 200°C. It is more preferably in the range of 90 to 150°C.

When the softening temperature is too low, the temperature at which the fuel cell can run is limited, and since the fuel cell itself generates heat by a reaction, use for a long period of time is restricted. Furthermore, it is not desirable for the softening temperature to be higher than this range since there is the problem that a functional group such as a sulfonic acid group of the polymer electrolyte easily decomposes at the temperature at which pressing is carried out, or the problem that the polymer electrolyte or carbon, which is a catalyst support, is easily oxidatively degraded by the action of the catalyst within the electrode.

With regard to the porous substrate of the present invention, the tensile modulus of elasticity is preferably 500 to 5000 MPa, and more preferably 1000 to 5000 MPa. The breaking strength is preferably 50 to 500 MPa, and more preferably 100 to 500 MPa.

When they are lower than these ranges, the membrane easily deforms due to a force caused when the filled polymer electrolyte tries to swell in methanol or water. When they are higher than the above ranges, the substrate becomes too brittle and the membrane easily cracks during press-molding when bonding an electrode or during tightening, etc. when assembling into a cell.

Furthermore, the porous substrate preferably has heat resistance to a fuel cell running temperature and resistance to external force so that it does not easily stretch.

Examples of materials having the above-mentioned properties include thermoplastic polymers such as polyolefin, halogenated polyolefin, polysulfone, polyphenylene oxide, polyamide, and polyester, and polymers to which resistance to deformation such as stretching caused by an external force is imparted by a method such as drawing or crosslinking by exposing a polyolefin to radiation or the addition of a crosslinking agent. These materials may be used singly or made into a composite by a method such as layering two or more types thereof.

Among these porous substrates, it is preferable to use one formed from a drawn polyolefin, a crosslinked polyolefin, or a polyolefin that has been crosslinked subsequent to drawing since they are readily available and the workability during a filling step is good. Among the polyolefins, those having polyethylene as a main component are excellent in terms of hydrophobicity, durability, availability, etc.

The porosity of the porous substrate of the present invention obtained as above is preferably 5% to 95%, more preferably 5% to 90%, and particularly preferably 20% to 80%. Furthermore, the average pore size is preferably in the range of 0.001 to 100 µm, and more preferably 0.01 to 1 µm. When the porosity is too small, the number of ion-exchange groups per unit area is too small and the power when used as a fuel cell is low, and when it is too large the membrane strength is undesirably degraded. Moreover, the thickness of the substrate is preferably no greater than 200 µm. It is more preferably 1 to 150 µm, yet more preferably 5 to 100 µm, and particularly preferably 5 to 50 µm. When the membrane thickness is too small, the membrane strength is degraded, and the permeation of methanol increases, and when it is too large, the membrane resistance becomes too large and the power of a fuel cell is too low, both being undesirable.

With regard to the electrolyte membrane used in the present invention, one formed by filling the interior of pores of the above-mentioned porous substrate, in particular a hydrocarbon-based porous substrate, with a polymer electrolyte made of an ion-exchange group-containing hydrocarbon-based polymer electrolyte may preferably be used. A method for filling with the polymer is not particularly limited, but it may be achieved by impregnating a porous substrate with a solution of a polymer or with a molten polymer, or by impregnating a porous substrate with a monomer composition forming a polymer electrolyte or a solution or dispersion thereof, followed by polymerization of the monomer. In this process, the monomer composition or the solution thereof, etc. used for filling may contain a cross-linking agent, a polymerization initiator, a catalyst, a curing agent, a surfactant, etc. as necessary. Furthermore, an ion-exchange group may be included in advance in a monomer forming the polymer, or may be introduced by a step such as sulfonation after filling.

The polymer electrolyte with which the interior of pores of the porous substrate is filled in the present invention is not particularly limited, and a normally known one having an ion-exchange group may be used. For example, a polymer obtained by radical polymerization may preferably be used. As described in Patent Publication 3 above, it may be obtained by a method in which, after a porous substrate is impregnated with an ion-exchange group-containing monomer forming the polymer electrolyte, polymerization is carried out using ultraviolet rays, etc.

As the ion-exchange group-containing monomer, a sulfonic acid group-containing vinyl compound or a phosphoric acid group-containing vinyl compound is preferable because of excellent proton conductivity, and 2-methylpropane-2-(meth)acrylamidosulfonic acid is more preferable due to its high polymerizablility. It is also preferable to polymerize these monomers with a crosslinking agent added thereto since a polymer thus obtained by polymerization is resistant to being leached out.

A compound that can be used as the crosslinking agent has at least two polymerizable crosslinking functional groups per molecule, and by carrying out polymerization by mixing it with the above-mentioned monomers, crosslinked sites are formed in the polymer, thus giving a polymer having a three-dimensional network structure that does not dissolve or melt.

Specific examples thereof include *N,N'*-methylenebis(meth)acrylamide, *N,N'*-ethylenebis(meth)acrylamide, *N,N'*-propylenebis(meth)acrylamide, *N,N'*-butylenebis(meth)acrylamide, polyethylene glycol di(meth)acrylate, polypropylene glycol di(meth)acrylate, trimethylolpropane diallyl ether, pentaerythritol triallyl ether, divinylbenzene, bisphenol di(meth)acrylate, isocyanuric acid di(meth)acrylate, tetraallyloxyethane, and triallylamine.

Furthermore, the crosslinking functional group is not limited to those having a carbon-carbon double bond, and a di- or higher-functional epoxy compound, etc. may be used, although they are inferior since the polymerization reaction rate is low. When an epoxy compound is used, crosslinking may be carried out by a reaction with an acid group such as a carboxyl group in the polymer, or a copolymerizable monomer having a hydroxyl group, etc. may be added as a third component to a monomer composition and crosslinked. These crosslinking agents may be used singly or in a combination of two or more types as necessary.

The higher the content of the crosslinking agent, the denser the polymer electrolyte and the more resistant it is to swelling, and as a result the methanol permeation of the electrolyte membrane is suppressed and the fuel utilization efficiency when used as a DMFC improves. However, since there is a relative decrease in the amount of ion-exchange groups accompanying an increase in crosslinking agent, the proportion of the crosslinking agent has an upper limit in order to obtain a preferred power as a fuel cell.

That is, a preferred proportion of the crosslinking agent is in the range of 5 to 70 weight % of the sum total of the crosslinking agent and the monomer of the monomer composition components with which the porous substrate of the electrolyte membrane is impregnated. It is more preferably 15% to 60%. When it is less than this range, methanol permeation is too high and it is not suitable for a DMFC. When it is greater than this range, since there is a relative decrease in the amount of ion-exchange groups, the cell performance deteriorates.

A third copolymerization component having no protonic acid group may be added as necessary to the above monomer composition for the polymer electrolyte used in the present invention in order to adjust the swelling properties, etc. of the polymer.

Such a monomer is not particularly limited as long as it can copolymerize with the ion-exchange group-containing monomer and the crosslinking agent used in the present invention, and examples thereof include (meth)acrylic acid esters, (meth)acrylamides, maleimides, styrenes, vinyl organic acids, allyl compounds, and methallyl compounds.

Means for polymerizing the above-mentioned monomer composition is not particularly limited, and a known radical polymerization method may be applied. The radical polymerization may be carried out simply by heating or irradiating with UV rays, but a polymerization initiator is normally added and polymerization is initiated by a radical generated by decomposition of the polymerization initiator.

As such a polymerization initiator, ones that initiate radical polymerization by heating such as a peroxide, an azo compound, or a redox polymerization initiator, or ones that initiate radical polymerization by UV rays or visible light are widely used.

Among the above, polymerization that is photoinitiated by ultraviolet rays is desirable since the polymerization reaction is easy to control and a desired electrolyte membrane is obtained with good productivity by a relatively simple process. When photoinitiated polymerization is carried out, it is preferable to dissolve or disperse a radical photopolymerization initiator in a monomer or a solution or dispersion thereof in advance. As a method that allows polymerization to be easily carried out without adding a polymerization initiator, a method involving irradiation with an electron beam is also known, and this method may also be preferably employed.

It is desirable that the surface of the electrolyte membrane of the present invention is not covered by the polymer electrolyte with which the interior of the pores is filled and that the surface layer of the porous substrate is exposed since adhesion to the electrode is stable and the reliability is high, and a production process therefor is explained below.

As a simple method, a method may be used in which, after impregnating with a monomer for a polymer electrolyte and polymerizing it, a polymer electrolyte layer formed on the surface is scraped off. When carrying this out, a method involving rubbing with a brush, a nylon scrubber, etc., or a method involving scraping off with a scraper, etc. may be used. Furthermore, in this case it is desirable to carry it out while making the polymer electrolyte attached to the surface swell by dampening the membrane with water. When the polymer electrolyte adheres strongly to the surface, it can easily be removed by scraping off by dampening it with an alkaline aqueous solution of sodium hydroxide, potassium hydroxide, sodium carbonate, potassium carbonate, etc., but it is necessary to carry out washing with an acid afterward so as to convert internal ion-exchange groups into protonic acid groups.

In the present invention, when the methanol permeability coefficient, at a temperature of 25°C, of the electrolyte membrane in which the interior of pores of a porous substrate is filled with a polymer electrolyte is 15 (µm·kg)/(m²·h) or less, the effect is particularly outstanding. In the present invention, an electrolyte membrane in which the interior of pores of a porous substrate is filled with a polymer electrolyte is used, and since methanol permeation can be suppressed by such a structure, even when the membrane thickness is thin, methanol permeation prevention properties can be exhibited.

On the other hand, it has been experimentally confirmed by the present inventors that a commercial polyperfluorosulfonic acid-based electrolyte membrane has a calculated methanol permeability coefficient of 40 to 60 (µm·kg)/(m²·h) and has a high affinity for methanol. This suggests that, since the polyperfluorosulfonic acid-based electrolyte membrane can contain a large amount of methanol or water and allows ions to pass easily, when an electrode is laminated, there is hardly any problem with ionic bonding properties. When such a membrane is used in a DMFC application, methanol permeation prevention properties are exhibited by increasing the thickness. However, since the material itself has a high affinity for methanol, there is the problem that the higher the concentration of methanol, the easier it is for fuel to permeate.

On the other hand, an electrolyte membrane having a small methanol permeability coefficient is effective in reducing the methanol permeation, but problems with ionic bonding to an electrode or the membrane becoming too dry easily occur. The structure of the membrane electrode assembly in accordance with the present invention solves the problems effectively. Furthermore, even when this membrane electrode assembly is applied to the above-mentioned polyperfluorosulfonic acid-based electrolyte membrane, it can be used without any problems, but since even without the design of the present invention, bonding to an electrode is good, this application is not very meaningful.

In the present invention, since the adhesion between the electrolyte membrane and the electrode is excellent, an MEA in which the electrode of the present invention is combined is suitably used in a solid polymer fuel cell, in particular a direct liquid fuel cell, and more particularly a direct methanol fuel cell.

The electrode used in the present invention comprises as an essential constituent at least a catalyst layer for promoting a reaction accompanying fuel cell power generation. In the catalyst layer, the polymer electrolyte content of a catalyst layer surface that is in contact with the electrolyte membrane is made higher than that of other regions, or a high electrolyte content layer is formed. The electrode is layered on opposite faces of the electrolyte membrane, a pair thereof being provided; as a result the catalyst layer is also provided on opposite faces of the electrolyte membrane, that is, as a pair, and it is preferable in the two catalyst layers to form a region in which the polymer electrolyte content is higher than that in other regions or to form a high electrolyte content layer, but this may be carried out for only one of the catalyst layers, thus giving a corresponding effect.

The catalyst layer is formed from a catalyst and an electrolyte as essential components. Furthermore, the catalyst layer formed therefrom has a porous form so that air and fuel efficiently diffuse to the catalyst. In order to bind catalyst particles themselves, a resin component such as PTFE may be added.

The pair of electrodes used in the present invention may employ, other than the above-mentioned catalyst layer, a gas diffusion layer normally used in the fuel cell field. The catalyst layer is generally fixed to one side of the gas diffusion layer by a method such as coating, or the catalyst layer and the electrolyte membrane are first laminated and incorporation into a fuel cell is carried out by positioning with respect to the catalyst layer. The gas diffusion layer has the function at the cathode of making an oxidizing agent such as air or generated water permeate and the function at the anode of making fuel or generated carbon dioxide gas, etc permeate. Both the electrodes have the function of letting electrons pass. Because of this, a porous material formed from a conductive material is used.

Examples of such a gas diffusion layer include a carbon paper, a carbon cloth, a carbon nonwoven cloth, a foamed metal, a metal mesh, and a conductive power such as carbon black fixed to a metal mesh by means of a binder such as PTFE.

When the size of pores is large, as is the case for a carbon paper, in order to prevent the catalyst from penetrating the pores and thus degrading the utilization efficiency, it may be coated with an ink having conductive microparticles such as carbon black as a main component, and the gas diffusion layer referred to here may include this coating. The gas diffusion layer may have in common a role as a current collector 4 in the membrane electrode assembly shown in FIG. 1.

In the present invention, the catalyst used in the electrode has the function of promoting a reaction at the anode and cathode of the fuel cell and is an essential component for the fuel cell electrode. The type of catalyst used is not particularly limited as long as it is one that is normally used in a fuel cell.

For example, microparticles of a noble metal such as platinum may be used. With regard to the noble metal catalyst, one forming microparticles on its own, such as, for example, platinum black, may be used by mixing with another catalyst layer component. Alternatively, it may be added in a form in which it is supported on a conductive support such as carbon black. Furthermore, as the noble metal catalyst, platinum, etc. may be used on its own, but another metal may be used in combination by mixing or alloying. As an example thereof, the combined use of platinum and ruthenium is widely carried out in order to reduce poisoning of the catalyst by carbon monoxide on the anode side.

Furthermore, the catalyst layer is formed from a catalyst such as a noble metal and an ion-conducting material such as polyperfluorosulfonic acid. Since the catalyst layer is required to make electrons, ions, and fuel or an oxidizing agent move efficiently and to form a large number of reaction points, called a three-phase body, in a confined space, its composition and a formation method are extremely important; in order to carry out electronic conduction, it is necessary for particles of a noble metal catalyst or a conductive material such as carbon black supporting a noble metal catalyst to be in contact with each other, and it is necessary for the catalyst layer to be porous so that fuel or air easily permeates and diffuses. An ion-conducting section has the function of making ions permeate and transfers ions involved in a reaction by being in contact with the catalyst. In order to impart such a function, it is desirable for the catalyst layer to be porous, and the surface of catalyst particles is thinly covered by an ion-conducting material such as a polymer electrolyte.

In this MEA, in order to form a pathway for making protons generated in the catalyst within an anode electrode move to the membrane or for making protons move from the membrane to the vicinity of the catalyst on a cathode side, an electrolyte is added to the interior of the electrode.

As an electrolyte added to the interior of the electrode, one formed from a material having an ion-exchange group in the same way as for the electrolyte membrane is used in an electrode for both the anode and the cathode of a fuel cell. The electrolyte has a function as an ionic conduction path for moving ions such as protons generated within an electrode to an electrolyte membrane and further moving them to the electrode on the opposite side.

Such an electrolyte may be any electrolyte that is normally used in a fuel cell, and examples of an electrolyte that is widely used include a polyperfluoroalkylsulfonic acid. The polyperfluoroalkylsulfonic acid is normally available in a state in which it is dissolved in an alcohol, etc., and as an example of an application method a catalyst layer is formed by mixing it with a component such as a catalyst to give an ink and applying and drying it. The polyperfluoroalkylsulfonic acid is an uncrosslinked linear polymer but has the property of being hard to easily dissolve in water, etc. once it has dried, and it is therefore normally used without any particular crosslinking. Furthermore, if the solvent is simply evaporated at a low temperature, there is gradual leaching out into fuel, etc., a practical lifespan cannot be obtained, and means for making dissolution difficult by calcining at a high temperature of 120°C to 200°C is therefore employed.

Moreover, a hydrocarbon-based polymer electrolyte may be used. In this case, as disclosed in Patent Publication 2, it is dissolved in an organic solvent other than methanol, such as methyl ethyl ketone, acetonitrile, N,N-dimethylformamide, trichloroethane, toluene, or xylene, and a solution of a polymer electrolyte that is insoluble in water and methanol may be used as the polyperfluoroalkyl sulfonic acid, or it may be used by a method in which a monomer forming the above-mentioned crosslinked polymer electrolyte is used and this is polymerized in advance together with a catalyst, thus forming the polymer around the catalyst.

In the present invention, by forming a high electrolyte content layer in the catalyst layer and by filling the interior of pores of a porous substrate with an electrolyte, and preferably by exposing the surface of the porous substrate without it being covered by the electrolyte filling the surface layer portion, the bonding of the electrolyte membrane and the electrode, which is a weakness in a hydrocarbon-based electrolyte membrane, is improved, and the bonding can be maintained stably.

This high electrolyte content layer is formed from a composition containing a polymer electrolyte on its own or a polymer electrolyte and a microparticulate filler. The high electrolyte content layer has a high proportion of the polymer electrolyte compared with the rest of the catalyst layer, and the polymer electrolyte is preferably at least 30% as a ratio by volume of the high electrolyte content layer. The proportion of the polymer electrolyte in the high electrolyte content layer is at least twice that of other regions of the catalyst layer as a ratio by volume. Since, if the proportion of the polymer electrolyte in the catalyst layer increases, there are fewer holes, thus inhibiting the diffusion of air, it is preferable to have the minimum necessary of the polymer electrolyte, but since the high electrolyte content layer of the catalyst layer has the function of smoothly carrying out ionic conduction between the catalyst layer and the electrolyte membrane, which has part of the non-ionically conducting porous substrate exposed on the surface, it is preferable for the high electrolyte content layer to contain a larger amount of polymer electrolyte than other regions of the catalyst layer. It is more preferable for the polymer electrolyte content of the high electrolyte content layer in the catalyst layer to be at least 60% as a ratio by volume and for the polymer electrolyte content of said other regions of the catalyst layer to be less than 30% as a ratio by volume.

In these cases, it is not particularly necessary for the high electrolyte content layer to be porous, but it may be porous as necessary and, moreover, it is essential for the catalyst layer to be formed as a porous material in terms of ease of diffusion of fuel or air within the layer. In this way, each layer often contains holes, but the holes are not included when calculating the ratio by volume in the present invention.

The polymer electrolyte forming the high electrolyte content layer is a polymer having an ion-exchange group such as sulfonic acid or phosphoric acid, and is preferably a polyperfluoroalkyl sulfonic acid-based polymer since the area around the catalyst is exposed to a very severe environment. The above-mentioned crosslinking polymer electrolyte may also be used, and in this case since, if it is used on its own, the electrode easily peels off, it is necessary to add an adhesive component such as microparticles of a thermoplastic resin having good adhesion to the electrolyte membrane as a microparticulate component. As such a material, polyethylene microparticles, polypropylene microparticles, polyamide microparticles, polyester microparticles, etc. may be used. A polyolefin such as polyethylene is particularly preferable since it is resistant to hydrolysis and it is electrochemically stable.

Examples of a microparticulate filler forming the high electrolyte content layer include conductive microparticles such as a catalyst or carbon black and microparticles with a hydrophilic surface. Among them, when the conductive microparticles are used as an ink by mixing with a polymer electrolyte, a solvent, etc., even if the catalyst layer is coated with the ink, it is possible to suppress degradation of the intrinsic performance due to blockage of pores by the polymer electrolyte penetrating the catalyst layer or due to large change in the composition within the catalyst layer. With regard to this microparticulate filler, it is necessary to select one that is stable at least toward the electrolyte used. The microparticulate filler preferably has a diameter of no greater than 100 µm, and more preferably no greater than 50 µm. If the microparticulate filler is too large, when an MEA is produced, a short circuit might occur between the cathode and the anode.

Other than the above, the microparticulate filler may also be used for improving fuel cell performance. It may also be used for improving adhesion to the electrode.

In a DMFC, since water contained in fuel permeates to the cathode side, water is supplied to the polymer electrolyte in the catalyst layer and the membrane on the cathode side, thus maintaining ionic conductivity well, and it is normally unnecessary to humidify a gas such as air. Furthermore, the application of a DMFC to portable equipment is being investigated, and a device such as a humidifier is not normally used in combination. However, in the DMFC, for the purpose of improving fuel efficiency and performance, it is desirable for methanol permeation to be suppressed. When such a membrane having suppressed methanol permeation is used, since permeation of water is also suppressed, and it has been confirmed by experiment by the present inventors that, in spite of an abundance of water being present on the anode side, which is separated by the membrane, on the cathode side there is insufficient moisture, with there only being water generated by a reaction, and the cell performance deteriorates.

In such a case, by adding a hydrophilic filler to the high electrolyte content layer on the cathode side, water is retained in the vicinity of the cathode and the performance is improved.

Examples of such a filler include a silica such as fumed silica having a hydrophilic group on the surface (e.g. Aerosil 300, manufactured by Nippon Aerosil Co., Ltd.), white carbon, or colloidal silica, titanium oxide, and a zeolite.

Furthermore, in the DMFC, as described above, in order to enhance the fuel utilization efficiency and improve the cell performance it is desirable for permeation of methanol from the anode side to the cathode side to be suppressed as much as possible. Enhancement of such a function normally depends largely on an improvement in the electrolyte membrane, but by adding a microparticulate filler to the interior of the high electrolyte content layer of the present invention, the methanol permeation of the whole MEA can be further suppressed. Although it is apparent that the more microparticulate filler added, the further the methanol permeation can be suppressed, when the amount of polymer electrolyte decreases, the internal resistance of the layer increases, and the cell performance instead deteriorates. Because of this, it is preferable to use a plate-shaped filler in combination for the purpose of decreasing the amount of methanol permeation, adding a small amount of the filler so as not to degrade the ionic conductivity.

The plate-shaped filler referred to here is a general term for a flake-shaped filler having a small thickness compared with its area, and ones called ramenta-shaped, scale-shaped, etc. are also used; when the thickness of the plate shape is t, the minimum distance for the plane direction length = x, and the maximum distance = y, the relationships t < x and t < y generally hold. In general, the higher the aspect ratio, for example, both x and y being at least 10 times or 100 times that of t, the smaller the amount necessary for efficiently suppressing methanol permeation, which is preferable.

Examples of such a filler include glass flake, talc, alumina, clay, mica, graphite, and bentonite. Among them, one containing few ionic impurities and that avoids contaminating the electrolyte is preferable, and examples thereof include alumina, glass, and graphite. One that normally contains an ionic material, such as mica, may be used after carrying out an ion-exchange treatment.

With regard to the MEA according to the present invention, the high electrolyte content layer is formed on the catalyst layer of the electrode, and when forming an MEA, the surface of the catalyst layer that is in contact with the electrolyte membrane has a high electrolyte content, or the high electrolyte content layer is positioned thereon. It is surmised that, in accordance with this structure, the electrolyte section of the electrolyte membrane easily makes contact with the electrolyte in the catalyst layer and, moreover, since the high electrolyte content layer and the polymer electrolyte of the catalyst layer are integrated, ionic conduction proceeds smoothly overall.

### Examples

### Electrolyte Membrane Production Example 1

A crosslinked polyethylene porous substrate (thickness 30 µm, porosity 37%, average pore size about 0.1 µm) was immersed in a polymer electrolyte-forming monomer composition aqueous solution formed from 35 g of 2-acrylamido-2-methylpropanesulfonic acid (product name ATBS, manufactured by Toagosei Co., Ltd.), 15 g of *N,N'*-ethylenebisacrylamide, 0.005 g of a nonionic surfactant, 0.005 g of a UV radical generator, and 50 g of water, thereby filling it with the aqueous solution.

Subsequently, the porous substrate was withdrawn from the solution and then sandwiched between 50 µm thick PET films so that no bubbles were formed.

It was then irradiated from the front and back with ultraviolet rays at 1000 mJ/cm² using a high pressure mercury lamp. After irradiation, the PET film was removed by peeling off, the surface was rubbed with a resin fiber nonwoven cloth scrubber while wetting the surface with pure water to thus remove resin attached to the surface, and the membrane was dried naturally, thus giving an electrolyte membrane.

When water droplets were applied to the surface of the electrolyte membrane, water was repelled, suggesting that the polyethylene used as a substrate was exposed.

With regard to the properties of this electrolyte membrane, as shown in Table 1, the proton conductivity was 4.1 S/cm², the methanol permeation flux, which expresses the amount of methanol permeating the electrolyte membrane, was 0.08 kg/(m²·h), and the methanol permeability coefficient, which is a value intrinsic to a material and is converted on a thickness basis from the methanol permeability, was 2.7 µm·kg/(m²·h).

Compared with the methanol permeation flux and the permeation coefficient of Nafion 117 shown in Table 1, it was found that the membrane of the present production example suppressed methanol permeation far more than the fluorine-based electrolyte membrane. The membrane thus obtained was sandwiched between catalyst-equipped electrodes of each of Examples and Comparative Examples, hot-pressed to give an MEA, and evaluated as a direct methanol fuel cell.

### Electrolyte Membrane Production Example 2

A crosslinked polyethylene porous substrate (thickness 30 µm, porosity 37%, average pore size about 0.1 µm) was immersed in a polymer electrolyte-forming monomer composition aqueous solution formed from 35 g of 2-acrylamido-2-methylpropanesulfonic acid (product name ATBS, manufactured by Toagosei Co., Ltd.), 15 g of *N,N*'-ethylenebisacrylamide, 0.005 g of a nonionic surfactant, 0.005 g of a UV radical generator, and 50 g of water, thereby filling it with the aqueous solution.

Subsequently, the porous substrate was withdrawn from the solution and then sandwiched between 50 µm thick PET films so that no bubbles were formed.

It was then irradiated from the front and back with ultraviolet rays at 1000 mJ/cm² using a high pressure mercury lamp. After irradiation, the PET film was removed by peeling off, and the membrane was dried naturally, thus giving an electrolyte membrane.

When water droplets were applied to the surface of the electrolyte membrane, water was not repelled, suggesting that the polyethylene used as a substrate was not exposed.

The properties of this electrolyte membrane were as shown in Table 1; the proton conductivity was 4.2 S/cm², the methanol permeation flux was 0.08 kg/(m²·h), and the methanol permeability coefficient was 2.7 µm·kg/(m²·h).

Therefore, apart from a thin layer of the electrolyte polymer being formed on the surface, the performance was the same as in Production Example 1. The membrane thus obtained was sandwiched between catalyst-equipped electrodes of each of Examples and Comparative Examples, hot-pressed to give an MEA, and evaluated as a direct methanol fuel cell.

### Electrolyte Membrane Production Example 3

A crosslinked polyethylene porous substrate (thickness 30 µm, porosity 37%, average pore size about 0.1 µm) was immersed in a polymer electrolyte-forming monomer composition aqueous solution formed from 45 g of 2-acrylamido-2-methylpropanesulfonic acid (product name ATBS, manufactured by Toagosei Co., Ltd.), 5 g of *N,N*'-ethylenebisacrylamide, 0.005 g of a nonionic surfactant, 0.005 g of a UV radical generator, and 50 g of water, thereby filling it with the aqueous solution.

Subsequently, the porous substrate was withdrawn from the solution and then sandwiched between 50 µm thick PET films so that no bubbles were formed.

It was then irradiated from the front and back with ultraviolet rays at 1000 mJ/cm² using a high pressure mercury lamp. After irradiation, the PET film was removed by peeling off, the surface was rubbed with a resin fiber nonwoven cloth scrubber while wetting the surface with pure water to thus remove resin attached to the surface, and the membrane was dried naturally, thus giving an electrolyte membrane.

When water droplets were applied to the surface of the electrolyte membrane, water was repelled, suggesting that the polyethylene used as a substrate was exposed.

The proton conductivity of this electrolyte membrane was 12.9 S/cm², the methanol permeation flux was 0.30 kg/(m²·h), and the methanol permeability coefficient was 10.4 µm·kg/(m²·h).

Compared with Nafion 117 shown in Table 1, it was found that the methanol permeation flux of the membrane of the present production example was on the same order as that of the fluorine-based electrolyte membrane, but the permeation coefficient was 1/5 or less of that of Nafion 117, suggesting that the material itself was resistant to the permeation of methanol but the permeation flux was on the same order due to the thickness being thin. The proton conductivity (units S/cm²) of the membrane was about 3 times that of Nafion 117, which was excellent. The membrane thus obtained was sandwiched between catalyst-equipped electrodes of each of Examples and Comparative Examples, hot-pressed to give an MEA, and evaluated as a direct methanol fuel cell.

**(Table 1)**

| | Electrolyte membrane production example | | | Fluorine-based electrolyte membrane |
|---|---|---|---|---|
| | 1 | 2 | 3 | |
| Electrolyte membrane methanol permeability coefficient [µm·kg/(m²·h)] | 2.7 | 2.7 | 10.4 | 56 |
| Electrolyte membrane methanol permeation flux [kg/(m²·h)] | 0.08 | 0.08 | 0.3 | 0.28 |
| Electrolyte membrane proton conductivity | 4.1 | 4.2 | 12.9 | 3.8 |

### Electrode Production Example 1

60 g of a commercial catalyst having platinum and ruthenium supported on carbon black (product name TEC61E54, manufactured by Tanaka Kikinzoku Kogyo K.K.), 20 g on a solids basis of a 5 weight % solution of a fluorine-based polymer electrolyte (product name Nafion, manufactured by DuPont) as an electrolyte, and 5 g on a solids basis of a polytetrafluoroethylene dispersion were stirred and mixed in a ball mill to give an anode catalyst ink.

This was printed on to one side of a commercial carbon paper (product name TGP-H-060, manufactured by Toray Industries, Inc.), one side of which had been coated in advance with a dispersion of carbon black in alcohol and dried so as to form a diffusion layer, and dried to give an anode electrode.

Similarly, a cathode catalyst ink was prepared using the same composition as for the anode side except that a commercial catalyst having platinum supported on carbon black (TEC10E50E, manufactured by Tanaka Kikinzoku Kogyo K.K.) was used.

This was printed on one side of a commercial carbon paper to which water repellency had been imparted by PTFE (TGP-H-060, manufactured by Toray Industries, Inc.) and dried to give a cathode electrode.

The proportion of polymer electrolyte in the catalyst layer in this case was about 25 vol %. The hydrocarbon-based electrolyte membrane prepared in Electrolyte Membrane Production Example 1 was sandwiched between this pair of electrodes and hot-pressed at 120°C to give an MEA. When it was evaluated as a direct methanol fuel cell, good power generation performance was exhibited.

### Example 1

### Example of use of a layer of Nafion on its own on catalyst layer

A PTFE sheet was coated with a 5 weight % solution of a commercial fluorine-based electrolyte polymer (product name Nafion, manufactured by DuPont), followed by drying to give a thin membrane.

The catalyst layers of a pair of the electrodes produced in Electrode Production Example 1 were superimposed on the above sheet, they were subjected to hot-pressing at 120°C, the PTFE sheet was removed to thus transfer the fluorine-based polymer electrolyte coating onto the catalyst layer, and they were finally heated under a nitrogen atmosphere at 180°C for 1 hour.

The high electrolyte content layer on the catalyst layer in this case had a polymer electrolyte proportion of 100 vol %. The hydrocarbon-based electrolyte membrane produced in Electrolyte Membrane Production Example 1 was sandwiched by this pair of electrodes and hot-pressed at 120°C, thus giving an MEA.

A direct methanol fuel cell was formed therefrom, and operated repeatedly for 5 hours per day, and when the cell performance after 5 hours was measured, the performance stabilized on the second day. Other properties were as shown in Table 2.

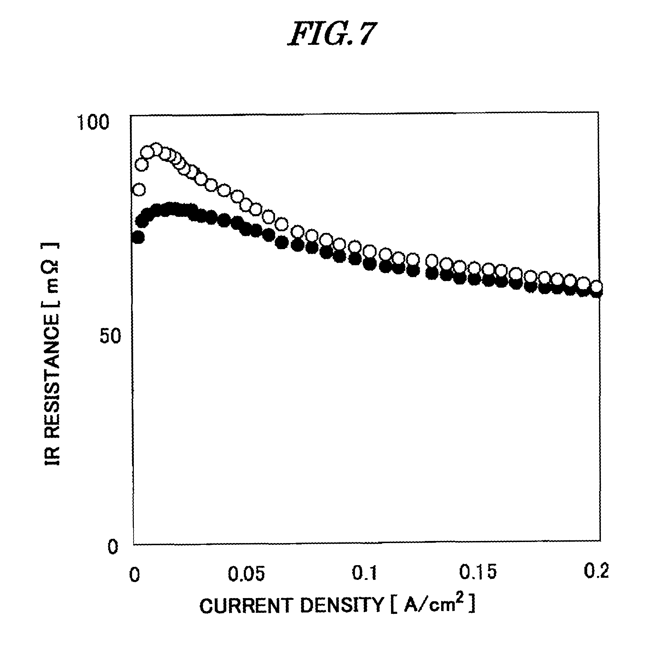

In the table, 'Good' denotes that there was no peeling off, and 'Poor' denotes that peeling occurred. Moreover, an IR resistance value measured in a low current density region is shown in FIG. 7 (marked by 'O' in the figure).

### Example 2

### Example of printing a mixture of Nafion and carbon on catalyst layer

60 g of a 5 weight % solution of a commercial fluorine-based electrolyte polymer (product name Nafion, manufactured by DuPont) and 1 g of carbon black (Ketjen Black EC, manufactured by Ketjen Black International) were mixed, and solvent was evaporated while stirring until a paste suitable for printing was obtained. This was printed on the catalyst layer of a pair of the electrodes produced in Electrode Production Example 1 by screen printing, and they were finally heated under a nitrogen atmosphere at 180°C for 1 hour.

The high electrolyte content layer on the catalyst layer in this case had a polymer electrolyte proportion of about 75 vol %. The hydrocarbon-based electrolyte membrane produced in Electrolyte Membrane Production Example 1 was sandwiched by this pair of electrodes, an MEA was obtained in the same manner as in Example 1, and a direct methanol fuel cell was formed therefrom, and operated repeatedly for 5 hours per day; when the cell performance after 5 hours was measured, the performance stabilized on the second day as in Example 1. Other properties were as shown in Table 2.

### Example 3

### Example of printing a mixture of Nafion and hydrophilic silica on catalyst layer

60 g of a 5 weight % solution of a commercial fluorine-based electrolyte polymer (product name Nafion, manufactured by DuPont) and 1 g of a hydrophilic fumed silica (Aerosil 300, manufactured by Nippon Aerosil Co., Ltd.) were mixed, and solvent was evaporated while stirring until a paste suitable for printing was obtained. This was printed on the catalyst layer of the cathode electrode produced in Electrode Production Example 1 by screen printing, and it was finally heated under a nitrogen atmosphere at 180°C for 1 hour.

The high electrolyte content layer on the catalyst layer in this case had a polymer electrolyte proportion of about 75 vol %.

As an electrode for the anode, the anode electrode prepared in Example 2 was used; the hydrocarbon-based electrolyte membrane produced in Electrolyte Membrane Production Example 1 was sandwiched by this pair of electrodes, and an MEA was obtained in the same manner as in Example 1.

A direct methanol fuel cell was formed therefrom, and operated repeatedly for 5 hours per day, and when the cell performance after 5 hours was measured, the performance stabilized on the second day as in Example 1.

As shown in FIG. 7 (marked by '●' in the figure), an IR resistance value measured in a low current density region was low compared with Example 1 (marked by 'O' in the figure). It is surmised that silica, which is a hydrophilic material, retained water generated on the cathode side or permeating through the membrane, thus preventing drying of the cathode side of the membrane or the polymer electrolyte within the cathode side electrode.

In either case, the IR resistance decreased accompanying an increase in load, and this was because water generated by a reaction humidified the membrane or the electrolyte within the catalyst layer on the cathode side, thus decreasing the resistance. Other properties were as shown in Table 2.

### Example 4

### Example of printing a mixture of Nafion and plate-shaped filler on catalyst layer

60 g of a 5 weight % solution of a commercial fluorine-based electrolyte polymer (product name Nafion, manufactured by DuPont) and 1 g of mica that had been washed in advance with 1 N hydrochloric acid and water to thus remove impurities such as metals were mixed, and solvent was evaporated while stirring until a paste suitable for printing was obtained.

This was printed on the catalyst layer of a pair of the electrodes produced in Electrode Production Example 1 by screen printing, and they were finally heated under a nitrogen atmosphere at 180°C for 1 hour.

The high electrolyte content layer on the catalyst layer in this case had a polymer electrolyte proportion of about 75 vol %.

The hydrocarbon-based electrolyte membrane produced in Electrolyte Membrane Production Example 1 was sandwiched by this pair of electrodes, and an MEA was obtained in the same manner as in Example 1. A direct methanol fuel cell was formed therefrom, and operated repeatedly for 5 hours per day; when the cell performance after 5 hours was measured, the performance stabilized on the second day as in Example 1.

When the methanol permeability within the cell was evaluated, the permeation was the least among the Examples and Comparative Examples. Other properties were as shown in Table 2.

### Example 5

### Example of printing a mixture of hydrocarbon-based polymer electrolyte, carbon, and polyethylene powder on catalyst layer

20 g of carbon black (Ketjen Black EC, manufactured by Ketjen Black International) was added to a polymer electrolyte-forming monomer composition aqueous solution formed from 40 g of 2-acrylamido-2-methyl propane sulfonic acid (product name ATBS, manufactured by Toagosei Co., Ltd.), 10 g of *N,N'*-ethylenebisacrylamide, 0.005 g of an azobis polymerization initiator (product name V50, manufactured by Wako Pure Chemical Industries, Ltd.), 45 g of water, and 5 g of butanol, and mixed by stirring well, and polymerization was then carried out by maintaining it under a nitrogen atmosphere at 70°C for 2 hours.

This was ground by a mortar and a pestle to give a paste, 5 g of a commercial powdered polyethylene (product name FLO-THENE, manufactured by Sumitomo Seika Chemicals Co., Ltd.) was further added thereto, and stirring was further carried out to give an ink, which was printed on the catalyst layer of a pair of the electrodes produced in Electrode Production Example 1.

They were finally dried under a nitrogen atmosphere at 80°C for 30 minutes, thus giving a pair of electrodes.

The high electrolyte content layer on the catalyst layer in this case had a polymer electrolyte proportion of about 71 vol %. The hydrocarbon-based electrolyte membrane produced in Electrolyte Membrane Production Example 1 was sandwiched by this pair of electrodes, and an MEA was obtained in the same manner as in Example 1.

A direct methanol fuel cell was formed therefrom, and operated repeatedly for 5 hours per day; when the cell performance after 5 hours was measured, the performance stabilized on the second day as in Example 1. Other properties were as shown in Table 2.

### Example 6

An MEA was produced by hot-pressing at 120°C using a pair of the electrodes produced in Example 1 and the electrolyte membrane produced in Electrolyte Membrane Production Example 3.

A direct methanol fuel cell into which this MEA was incorporated was operated repeatedly for 5 hours per day, and when the cell performance after 5 hours was measured, the performance stabilized on the second day. The methanol permeability was at the same level as that of Comparative Example 3, in which a fluorine-based electrolyte membrane was used, but the power was higher than that of Comparative Example 3. Other properties were as shown in Table 2.

### Comparative Example 1

The hydrocarbon-based electrolyte membrane produced in Electrolyte Membrane Production Example 1 was sandwiched by a pair of the electrodes produced in Electrode Production Example 1, which did not have a high electrolyte content layer, and an MEA was obtained in the same manner as in Example 1.

A direct methanol fuel cell was formed therefrom, and operated repeatedly for 5 hours per day; when the cell performance after 5 hours was measured, the internal resistance decreased, and it took 8 days for the performance to stabilize. Other properties were as shown in Table 2. An IR resistance value measured in a low current density region on the second day was 400 mΩ or greater and could not be shown in FIG. 7.

### Comparative Example 2

The hydrocarbon-based electrolyte membrane having a layer of a hydrocarbon-based polymer electrolyte on the surface produced in Electrolyte Membrane Production Example 2 was sandwiched by a pair of the electrodes produced in Electrode Production Example 1, which did not have a high electrolyte content layer, and an MEA was obtained in the same manner as in Example 1.

A direct methanol fuel cell was formed therefrom, and operated repeatedly for 5 hours per day; when the cell performance after 5 hours was measured, although the performance stabilized on the second day, it was found that when the MEA was immersed in water and allowed to stand, although the electrodes of the other Examples and Comparative Examples did not show peeling, etc, the electrode peeled off naturally after 24 hours of immersion in this Comparative Example, and it was not suitable for long-term operation. Other properties were as shown in Table 2.

### Comparative Example 3

An MEA was prepared by hot pressing at 120°C using a pair of the electrodes produced in Electrode Production Example 1, which did not have a high electrolyte content layer, and a commercial fluorine-based electrolyte membrane (Nafion 117, manufactured by DuPont) as the electrolyte membrane.

A direct methanol fuel cell into which this MEA was incorporated was operated repeatedly for 5 hours per day, and when the cell performance after 5 hours was measured, the performance stabilized on the second day.

However, the methanol permeability was high compared with Examples 1 to 5, and the cell performance was low when compared with Example 6, for which the methanol permeation flux was substantially the same. Other properties were as shown in Table 2.

**(Table 2)**

| | Example | | | | | | Comp. Ex. | | |
|---|---|---|---|---|---|---|---|---|---|
| | 1 | 2 | 3 | 4 | 5 | 6 | 1 | 2 | 3 |
| Number of days until stabilized | 2 | 2 | 2 | 2 | 2 | 2 | 8 | 2 | 2 |
| Maximum power density on 2nd day (mW/Cm²) | 65 | 63 | 68 | 63 | 64 | 97 | 17 | 71 | 70 |
| Maximum power density on 8th day (mW/cm²) | 68 | 67 | 71 | 64 | 68 | 102 | 53 | 73 | 74 |
| Current showing methanol permeation | 0.2 | 0.2 | 0.3 | 0.2 | 0.2 | 0.6 | 0.3 | 0.3 | 0.6 |
| Electrode bonding in water | Good | Good | Good | Good | Good | Good | Good | Poor | Good |

### Evaluation Methods

### (1) Proton conductivity

An electrolyte membrane that had swollen after being immersed in pure water at a temperature of 25°C for 1 hour was sandwiched between two platinum plates to give a measurement sample.

Measurement of AC impedance from 100 Hz to 40 MHz at a temperature of 25°C was then carried out to give the proton conductivity.

The higher the conductivity, the easier it is for protons to move in the electrolyte membrane, thus exhibiting its excellence in application to a fuel cell.

### (2) Permeability to methanol of electrolyte membrane:

A penetration experiment at 25°C was carried out as follows. An electrolyte membrane was sandwiched between glass cells, one of the cells was charged with a 10 weight % methanol aqueous solution, and the other cell was charged with pure water.

The amount of methanol penetrating to the pure water side was measured over time by gas chromatography, and a methanol permeability coefficient and a permeation flux were measured when a steady state was attained.

Since the permeation coefficient is a standardized value with respect to the film thickness, the lower the permeation coefficient, the harder it is in terms of materials for methanol to permeate through the interior of the electrolyte membrane; the permeation flux denotes the ease with which methanol permeates the membrane itself, and the smaller the permeation flux, the more suitable it is for application to a direct methanol fuel cell.

### (3) Electrode bonding in water:

An MEA was immersed in water in a beaker at a temperature of 25°C for 24 hours, and it was examined with respect to whether or not the electrode had peeled. When there was no peeling it was denoted as Good, and when peeling occurred it was denoted as Poor.

### (4) Fuel cell evaluation

The MEAs formed in the Examples and Comparative Examples were incorporated into single cell direct methanol fuel cells, and the cells were run under the following running conditions.

Fuel was a 10 weight % aqueous solution of methanol, the oxidizing agent was air, and the cell temperature was 50°C. The current density power characteristics were measured by changing the load by means of an electronic load.

### (5) Evaluation of methanol permeability of fuel cell:

The amount of methanol permeation was measured in accordance with the method below, which is also shown in 'Methanol Transport Through Nafion Membranes', Xiaoming Ren et al., Journal of The Electrochemical Society, 2000, Vol. 147, No. 2, p. 466-474, The Electrochemical Society.

Each MEA was incorporated into a fuel cell, and the cell was maintained at 50°C in a state in which a 1 mol/L methanol aqueous solution flowed to one electrode and nitrogen flowed to the other electrode.

Subsequently, a negative electrode was connected to the methanol electrode, a positive electrode was connected to the side where nitrogen was flowing, the voltage was increased, and the value of the current flowing in this arrangement was monitored.

The value of the current started to increase from about 0.5 V and became a constant value at around 0.7 to 1.0 V, and it was therefore the value of the current when it became a constant value that was compared. That is, when the voltage was increased, methanol that leaked to the electrode on the nitrogen side was oxidized to thus release a proton and an electron, thus demonstrating that the higher the value of current observed, the larger the amount of methanol that leaked.

### Industrial Applicability

When a membrane electrode assembly (MEA) formed by the process of the present invention is used in a fuel cell, since an electrolyte membrane has a structure in which holes of a porous substrate are filled with a polymer electrolyte and, in particular, part of the porous substrate is exposed on the membrane surface, the ionic bonding to an electrode, which is a weakness, can be improved without impairing the adhesion to the electrode, which is an advantage of the electrolyte membrane. Because of this, the time taken for the cell performance to become stable can be greatly reduced. Furthermore, by appropriately selecting the properties and the shape of a microparticulate material added to a high electrolyte content layer formed on the electrode surface, it is possible to prevent drying of the cathode side and reduce the permeation of methanol. Moreover, when an electrolyte membrane having a similar structure and having sufficiently high proton conductivity is used, the time for the cell performance to stabilize is naturally short, and it also contributes to an improvement in the cell performance.

Because of this, the membrane electrode assembly of the present invention is extremely useful as a membrane electrode assembly for a solid polymer fuel cell such as a direct methanol fuel cell, and its applicability is very promising in various industrial fields including the automobile industry.

## Claims

1. A membrane electrode assembly comprising:
an electrolyte membrane formed from a porous substrate having the interior of pores filled with a polymer electrolyte; and
an electrode disposed on opposite faces of the electrolyte membrane and having a catalyst layer formed from a catalyst and a polymer electrolyte;
the polymer electrolyte content in the catalyst layer being higher in a face where the catalyst layer is in contact with the electrolyte membrane than in other regions of the catalyst layer.

2. The membrane electrode assembly according to Claim 1, wherein the surface of the porous substrate in the electrolyte membrane is not covered by the polymer electrolyte used when the interior of the pores of the substrate was filled.

3. The membrane electrode assembly according to Claim 1, wherein the catalyst layer has a multilayer structure in which there is a layer having a high polymer electrolyte content and a layer having a low polymer electrolyte content.

4. The membrane electrode assembly according to Claim 3 wherein, in the catalyst layer, the ratio by volume of the polymer electrolyte content of the layer having a high polymer electrolyte content is at least twice the ratio by volume of the polymer electrolyte content of the layer having a low polymer electrolyte content.

5. The membrane electrode assembly according to Claim 3 or 4 wherein, in the catalyst layer, the polymer electrolyte content of the layer having a high polymer electrolyte content is at least 30% as a ratio by volume.

6. The membrane electrode assembly according to Claim 5 wherein, in the catalyst layer, the polymer electrolyte content of the layer having a high polymer electrolyte content is at least 60% as a ratio by volume, and the polymer electrolyte content of the layer having a low polymer electrolyte content is less than 30% as a ratio by volume.

7. The membrane electrode assembly according to Claim 1, wherein the electrolyte membrane has a methanol permeability coefficient at a temperature of 25°C of no greater than 15 (µm·kg)/(m²·h).

8. The membrane electrode assembly according to Claim 1, wherein the polymer electrolyte is obtained by polymerizing a sulfonic acid group-containing monomer and a crosslinking agent, and the proportion of the crosslinking agent is at least 15 weight % but less than 60 weight % of the total amount of monomer and crosslinking agent.

9. The membrane electrode assembly according to Claim 3 wherein, in the catalyst layer, the layer having a high polymer electrolyte content is a layer formed from a polymer electrolyte alone.

10. The membrane electrode assembly according to Claim 3 wherein, in the catalyst layer, the layer having a high polymer electrolyte content is a layer formed from a composition comprising a polymer electrolyte and a plate-shaped filler.

11. The membrane electrode assembly according to Claim 3 wherein, in the catalyst layer, the layer having a high polymer electrolyte content is a layer formed from a composition comprising a polymer electrolyte and a microparticulate filler.

12. The membrane electrode assembly according to Claim 11, wherein the microparticulate filler is conductive.

13. The membrane electrode assembly according to Claim 3 wherein, of the catalyst layers, the layer having a high polymer electrolyte content of the catalyst layer of the cathode side electrode is a layer formed from a composition comprising a polymer electrolyte and a hydrophilic microparticulate filler.

14. A direct liquid fuel cell employing the membrane electrode assembly according to any one of Claims 1 to 13.
